(19) Europäisches Patentamt
European Patent Office
Office européen des brevets

(11) **EP 1 963 154 B1**

(12) **EUROPÄISCHE PATENTSCHRIFT**

(45) Veröffentlichungstag und Bekanntmachung des Hinweises auf die Patenterteilung:
**11.01.2012 Patentblatt 2012/02**

(21) Anmeldenummer: **06819665.8**

(22) Anmeldetag: **22.11.2006**

(51) Int Cl.:
**B60T 8/40** *(2006.01)*   **B60T 13/66** *(2006.01)*

(86) Internationale Anmeldenummer:
**PCT/EP2006/068755**

(87) Internationale Veröffentlichungsnummer:
**WO 2007/068558 (21.06.2007 Gazette 2007/25)**

(54) **VERFAHREN UND VORRICHTUNG ZUR REPRODUZIERBAREN ERZEUGUNG EINES VORGEBBAREN ENDDRUCKS IN EINER BREMSANLAGE**

METHOD AND APPARATUS FOR THE REPRODUCIBLE GENERATION OF A PREDEFINABLE ULTIMATE PRESSURE IN A BRAKE SYSTEM

PROCEDE ET DISPOSITIF DE PRODUCTION REPRODUCTIBLE D'UNE PRESSION FINALE PREDETERMINEE DANS UNE INSTALLATION DE FREINAGE

(84) Benannte Vertragsstaaten:
**DE FR GB IT**

(30) Priorität: **16.12.2005 DE 102005060321**

(43) Veröffentlichungstag der Anmeldung:
**03.09.2008 Patentblatt 2008/36**

(73) Patentinhaber: **ROBERT BOSCH GMBH**
**70442 Stuttgart (DE)**

(72) Erfinder:
• **KOLARSKY, Jens**
**74321 Bietigheim/Bissingen (DE)**
• **MESSNER, Heiner**
**71696 Moeglingen (DE)**

• **MAHLENBREY, Ulrich**
**71679 Asperg (DE)**
• **BODMANN, Carsten**
**71634 Ludwigsburg (DE)**
• **OLIVEIRA, Raphael**
**74199 Untergruppenbach (DE)**
• **GRELL, Philipp**
**74321 Bietigheim-Bissingen (DE)**
• **BREGEAULT, Julien**
**71696 Moeglingen (DE)**
• **UNBESCHEIDEN, Mark**
**71706 Markgroeningen (DE)**

(56) Entgegenhaltungen:
**EP-A2- 0 982 208     WO-A2-00/02753**
**DE-A1- 19 527 705     DE-A1- 19 820 884**

**Beschreibung**

Die Erfindung geht aus von einem Verfahren bzw. einer Vorrichtung zur Steuerung eines hydraulischen oder pneumatischen Bremssystems nach den Oberbegriffen der unabhängigen Ansprüche.

Stand der Technik

Hydraulische Bremsanlagen für Kraftfahrzeuge sind in vielerlei Variationen bekannt. Dabei besitzt eine solche Bremsanlage wenigstens einen Bremskreis in dem wenigstens ein, das Druckmedium förderndes Mittel, insbesondere eine Pumpe, die auch als Rückförderpumpe bezeichnet wird, angeordnet ist. Darüber hinaus kann optional wenigstens ein weiteres, das Druckmedium förderndes Mittel, insbesondere eine selbstansaugende Ladepumpe vorgesehen sein, welche mit einer Saugleitung an einen Vorratsbehälter für das Druckmedium angeschlossen ist. Der Ein- und Auslass des Druckmediums in den Bremskreis wird ebenso wie der Ein- und Auslass des Druckmediums in den jeweiligen Radbremszylinder über Absperrvorrichtungen für Einlass und/oder Auslass und/oder Durchlass des Druckmediums, insbesondere Ventile gesteuert. Dies ist zum Beispiel in der DE 195 46 682 A1 offenbart. Auch in einem elektrohydraulischen Bremssystem, wie in der DE 195 48 248 A1 findet sich prinzipiell diese Anordnung, bei der das Druckmedium durch eine Pumpe über einen zwischengeschalteten Druckspeicher Ventilen zugeführt wird bzw. von Ventilen kommt. Dabei wird das Druckmedium durch Öffnen und Schließen der Ein- und Auslassventile entsprechend dem Bremswunsch des Fahrers und/oder den Ansteuersignalen einer vermittelnden Logik wie z.B. eines Antiblockiersystems, einer Antriebsschlupfregelung oder einer Fahrdynamikregelung in die Radbremszylinder eingeleitet bzw. aus ihnen ausgelassen.

Damit ist die beschriebene prinzipielle Anordnung gleichermaßen z.B. in einem hydraulischen Bremssystem durch eine Rückförderpumpe mit Ein- und Auslassventilen oder eine Ladepumpe mit Lade- und Umschaltventilen ebenso wie z.B. in einem elektrohydraulischen Bremssystem durch eine Speicherpumpe mit Ein- und Auslassventilen gegeben.

Die DE 198 20 884 A1 zeigt eine Ansteuerung einer Pumpe in einem Bremssystem, bei dem eine Abstimmung der Pumpenansteuerung an die Stellung eines Ventils vorgenommen wird. Dieses Dokument wird des Machstliegender Stand der Technik augesehen.

Durch eine ungeregelte Pumpenansteuerung bei Druckaufbau bzw. -abbau im Bedarfsall kann es zu einer Geräuschentwicklung bzw. zu Vibrationen kommen, die im Fahrgastraum störend wirken können. Zu diesem Zweck kann vorgesehen sein, die Pumpe nach erfolgtem Druckaufbau bzw. -abbau abzuschalten. Nachteilig bei einer derartigen Lösung ist jedoch, dass der dabei entstehende Enddruck im Bremskreis nach Abschalten der Pumpe-nicht reproduzierbar ist. Dies liegt u.a. daran, dass der Nachlauf der Pumpe aufgrund unterschiedlicher Randbedingungen wie auftretenden Last, Reibung, Drehzahl, Verschleiß oder Temperatur variiert und somit einen unterschiedlichen großen Beitrag zum Enddruck liefert. Darüber hinaus ist aber auch das Schaltverhalten der im Bremskreis vorhandenen Ventile normalerweise nicht eindeutig vorgebbar, da jedes Ventil in gewissen Grenzen Toleranzen aufgrund des an ihm anliegenden Drucks aufweist.

Die Aufgabe der vorliegenden Erfindung besteht somit darin, einen reproduzierbaren

Enddruck durch die Ansteuerung wenigstens eines Umschaltventils zu erreichen.

Vorteile der Erfindung

Die vorliegenden Erfindung beschreibt ein Verfahren und eine Vorrichtung zur Steuerung eines hydraulischen oder pneumatischen Bremssystems. Dabei ist vorgesehen, dass das Bremssystem wenigstens einen Bremskreis aufweist, dessen Druck mittels wenigstens eines elektrisch ansteuerbaren Putnpenmotors erhöht oder abgebaut werden kann. Weiterhin ist wenigstens ein elektrisch ansteuerbares Ventil beispielsweise in Form eines Umschaltventils vorgesehen, welches zur Druckregulierung im Bremskreis verwendet werden kann und in einen geöffneten Zustand versetzt wird, wenn es stromlos gesehalten wird.

Zur Erreichung eines vorgebbaren und somit reproduzierbaren Enddrucks in wenigstens einem Teil des Bremskreises wird zunächst bei geschlossenem Ventil die Pumpe zum Druckaufbau angesteuert. Das Ventil wird dann während des Pumpenbetriebs derart mit einer Ansteuerung angesteuert, dass es bei Erreichen eines Druckschwellenwerts in eine Öffnungsposition gebracht wird. Erfindungsgemäß wird nach Abschalten der Pumpe die Ansteuerung des Ventils derart modifiziert, dass während einer vorgebbaren Zeit eine kontinuierliche Veränderung der ersten Ansteuerung bis hin zu einer zweiten Ansteuerung vorgenommen wird, in der das Ventil insbesondere unter Berücksichtigung der an dem Ventil anliegenden Druckdifferenz eine Halteposition einnimmt. Erfindungsgemäß wird der Nachlauf der Pumpe nach Abschalten der Pumpe erfasst und die vorgebbare Zeit in Abhängigkeit vorn Nachlauf der Pumpe nach Abschalten der Pumpe derart vorgegeben, dass die Zeit größer als die Nachlaufzeit der Pumpe ist. Durch eine derartige Ansteuerung des Ventils kann unabhängig vom Nachlauf der Pumpe nach dem Abschalten ein vorgegebener und somit reproduzierbarer Druck im Bremskreis des Bremssystems eingestellt werden.

In einer Ausgestaltung der Erfindung ist vorgesehen, dass die erste Ansteuerung mittels eines Startstroms und die zweite Ansteuerung mittels eines Haltestroms erfolgt. Zweckmäßigerweise kann dabei der Startstrom größer sein als der Haltestrom, wobei auch eine umgekehrte Ansteuerung möglich sein kann.

Vorteilhafterweise benötigt das Ventil bei einer (hohen) anliegenden Druckdifferenz eine geringere Stromaufnahme als wenn an dem Ventil kein oder nur eine geringere Druckdifferenz anliegt.

Um den Startstrom und/oder die vorgebbare Zeit, in der beispielsweise der Startstrom kontinuierlich auf den Haltestrom geführt wird, zu bestimmen, wird der Nachlauf der Pumpe nach dessen Abschaltung erfasst. So kann beispielsweise aus einem oder mehreren zurückliegenden Pumpenzyklen auf den notwendigen Startstrom bzw. auf die notwendige vorgebbare Zeit geschlossen werden. Typische Größen, die den Nachlauf der Pumpe repräsentieren sind dabei die Drehzahl, die generatorische Spannung und die Zeit, bis zu der die Pumpe ohne Ansteuerung zur Ruhe kommt.

In einer Weiterbildung der Erfindung wird die kontinuierliche Veränderung der ersten Ansteuerung des Ventils derart auf die zweite Ansteuerung vorgenommen, dass in dem durch das Ventil abgetrennten Bremskreis ein zweiter Solldruck eingestellt wird. Vorteilhafterweise wird dabei in Abhängigkeit von dem zweiten Solldruck die Zeit vorgegeben, in der die kontinuierliche Veränderung vorgenommen wird.

Um den Druck im Bremskreis zu erreichen, ist in einer Ausgestaltung der Erfindung vorgesehen, das Ventil durch die zweite Ansteuerung bzw. den Haltestrom zu schließen.

Zur Aufnahme des Drucks im Bremskreis kann wahlweise ein Drucksensor oder ein Modell zur Abschätzung des Drucks verwendet werden. Typische Modelle verwenden dabei Pumpenparameter wie die Drehzahl, die Ansteuerung und/oder die Nachlaufspannung während der Ansteuerung, um das geförderte Volumen abzuschätzen. Darüber hinaus ist jedoch auch möglich, den Volumenfluss durch das Ventil abzuschätzen, um den Druck im Bremskreis zu erhalten.

Weitere Vorteile ergeben sich aus der nachfolgenden Beschreibung von Ausführungsbeispielen bzw. aus den abhängigen Patentansprüchen.

Zeichnungen

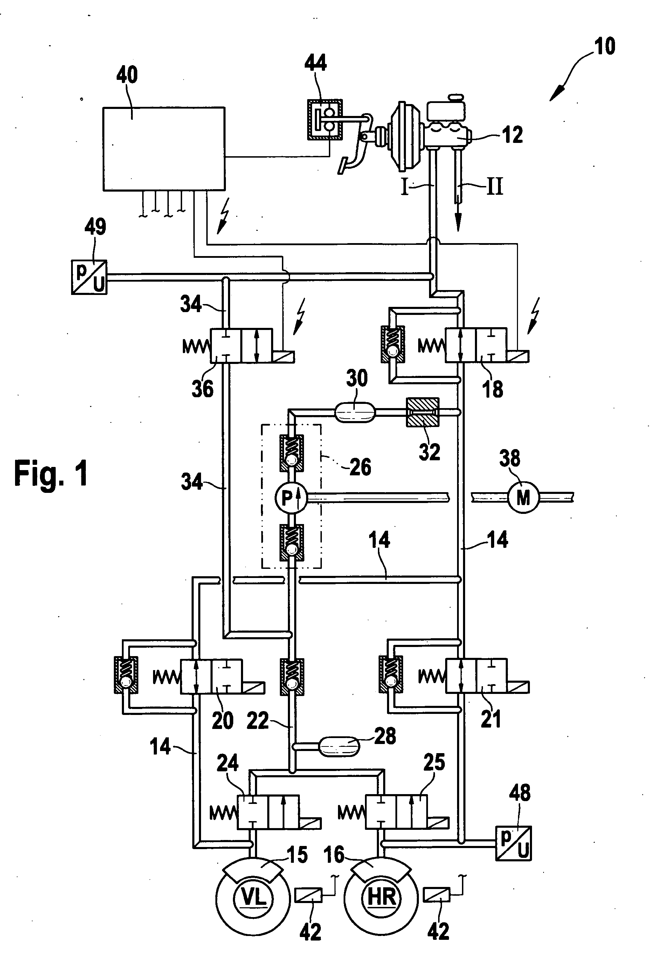

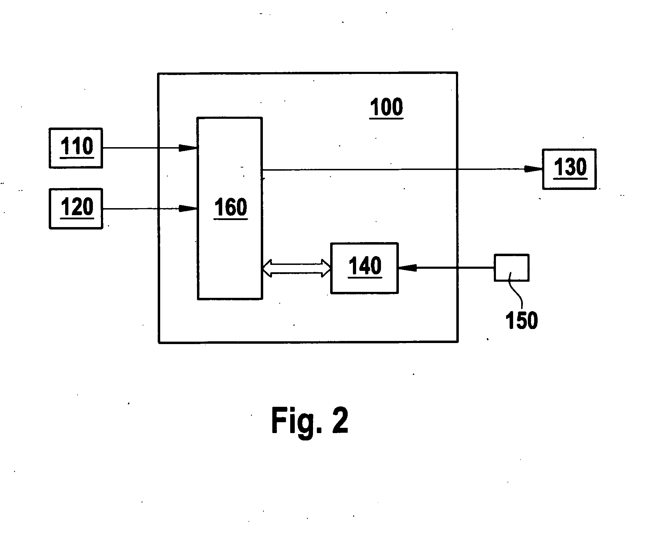

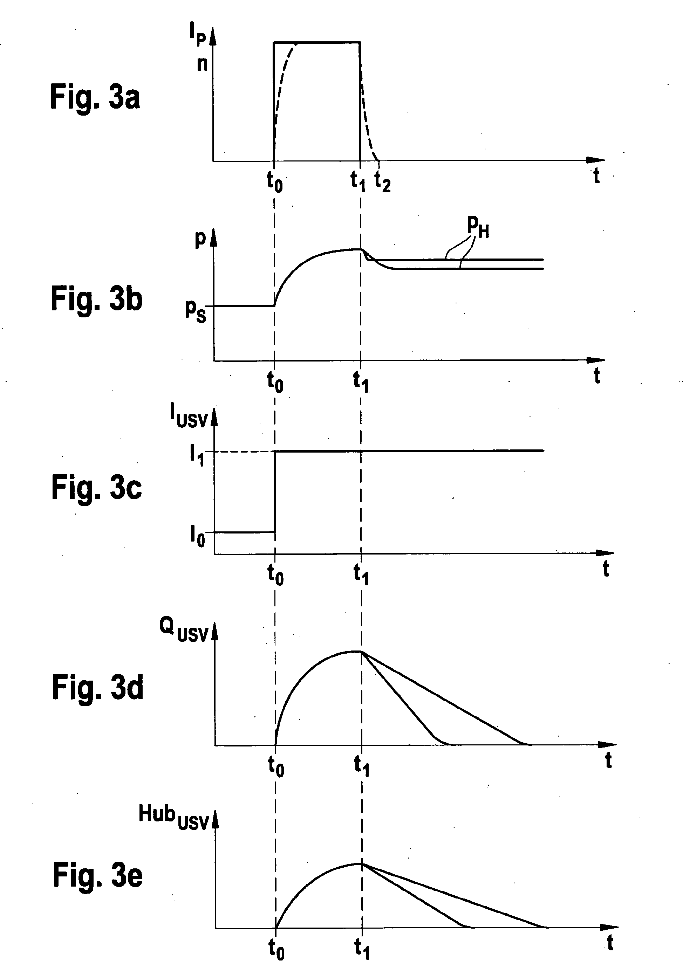

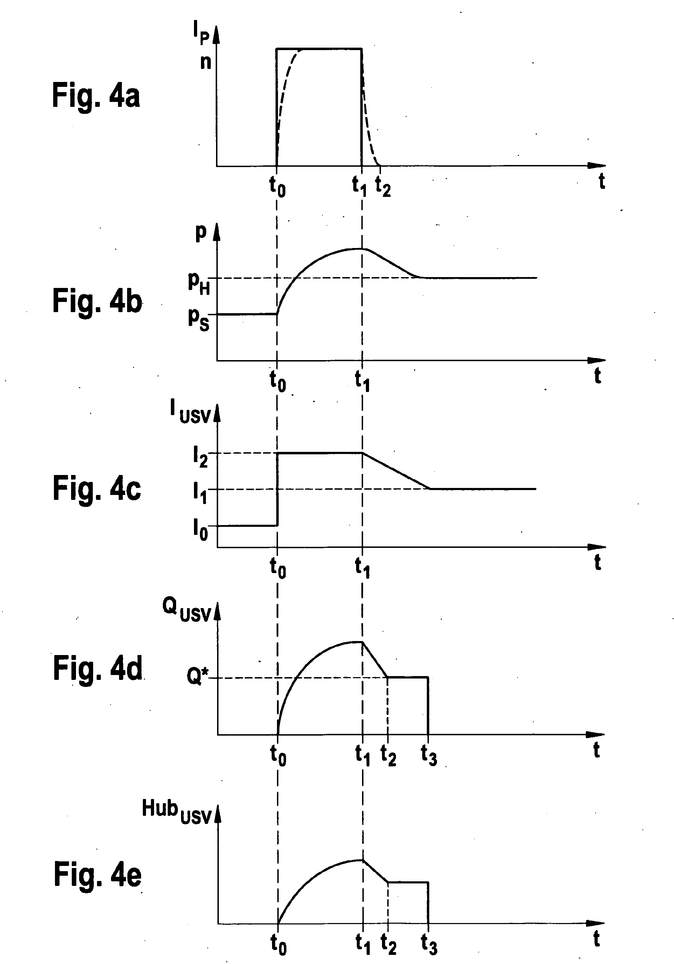

In der Figur 1 ist in einem Blockschaltbild schematisch ein Bremskreis einer Bremsanlage dargestellt. Eine erfindungsgemäße Vorrichtung wird schematisch anhand Figur 2 gezeigt. Die Figuren 3a bis 3e zeigen eine bekannten Ventilansteuerung in Abhängigkeit von einer entsprechenden Pumpenansteuerung. Dagegen zeigen die Figuren 4a bis 4e die erfindungsgemäße Ventilansteuerung ebenfalls in Abhängigkeit der entsprechenden Pumpenansteuerung.

Ausführungsbeispiel

Die Figur 1 zeigt schematisch eine hydraulische Fahrzeugbremsanlage 10 mit einem Zweikreis-Hauptbremszylinder 12, an den zwei voneinander unabhängige Bremskreise 1 und 11 angeschlossen sind. Zur Vereinfachung ist in der Zeichnung 1 jedoch nur der Bremskreis I dargestellt, wobei der andere Bremskreis 11 entsprechend realisiert wird. Es sei jedoch ausdrücklich erwähnt, dass ebenfalls entsprechend ausgestattete pneumatische Fahrzeugbremsanlagen mit dem erfindungsgemäßen Verfahren betrieben werden können.

Eine sich verzweigende Hauptbremsleitung 14 führt vom Hauptbremszylinder 12 zu zwei an den Bremskreis 1 angeschlossenen Radbremsen 15 und 16. Im vorliegenden Ausführungsbeispiel sind die beiden Radbremsen 15 und 16 einem Vorderrad und einem diagonal gegenüberliegenden Hinterrad des dazu gehörigen Fahrzeugs zugeordnet, wobei der Bremskreis II den beiden anderen Rädern zugeordnet sind. Neben dieser sog. X-Bremskreisaufteilung ist jedoch auch jede andere Aufteilung der Bremskreise denkbar.

In einem gemeinsamen Teil der Hauptbremsleitung 14 ist zwischen dem Hauptbremszylinder 12 und der Pumpe 26 ein Umschaltventil 18 angeordnet. Des weiteren sind in den verzweigten Teilen der Hauptbremsleitung 14 zwei in ihrer Grundstellung offene Einlassventile 20 und 21 angeordnet, die je einer der Radbremsen 15 und 16 vorgeschaltet sind. Von den Radbremsen 15 und 16 führt eine sich vereinigende Rückleitung 22, in der für jede der beiden Radbremsen 15 und 16 ein in seiner Grundstellung geschlossenes Auslassventil 24 bzw. 25 vorgesehen ist, zur Saugseite einer Hydropumpe 26, die auch als Rückförderpumpe bezeichnet werden kann. Zusätzlich ist an die Rückleitung 22 ein Hydrospeicher 28 angeschlossen, der bei ausgeschalteter Pumpe 26 und offenen Auslassventilen 24 bzw. 25 Bremsflüssigkeit aus den Radbremsen 15 bzw. 16 aufnehmen kann, für den Fall, dass Bremsdruck abgebaut werden soll. Optional ist eine Druckseite der Hydropumpe 26 über eine Dämpferkammer 30 und eine Drossel 32 zwischen dem Umschaltventil 18 und den Einlassventilen 20 und 21 an die Hauptbremsleitung 14 angeschlossen. Über eine Ansaugleitung 34, in der ein in seiner Grundstellung geschlossenes Ansaugventil 36 angeordnet ist, ist die Saugseite der Hydropumpe 26 an einen Hauptbremszylinder 12 angeschlossen. Mit Hilfe eines entsprechenden Sensors 49 kann der Druck im Hauptbremszylinder 12 erfasst werden, der durch die Betätigung des Bremspedals dem Bremswunsch des Fahrer entspricht.

Die Hydropumpen 26 des dargestellten und des nicht dargestellten Bremskreises 1 bzw. II, beispielsweise eine 6-Kolbenpumpe, sind mittels getrennter Pumpenmotoren antreibbar. Darüber hinaus ist jedoch in einem weiteren Ausführungsbeispiel möglich, die Pumpen mit einem gemeinsamen, elektrischen Pumpenmotor 38 anzutreiben. Das Umschaltventil 18, die Einlassventile 20 und 21, die Auslassventile 24 und 25 sowie das Hochdruckschaltventil 36 sind im vorliegenden Ausführungsbeispiel als Magnetventile vorgesehen, die u.a. zur Blokkierschutz- und zur Antriebschlupfregelung mit einem elektronischen Steuergerät 40 steuerbar sind. Dieses Steuergerät 40 kann darüber hinaus auch die Steuerung des Pumpenmotors 38 übernehmen und erhält Signale von Raddrehsensoren 42 und gegebenenfalls wenigstens einem Raddrucksensor 48, wobei die Sensoren zum Feststellen einer Blockierneigung eines Fahrzeugrades beim Bremsen oder von Schlupf beim Anfahren ausgewertet werden können. Darüber hinaus erhält das Steuergerät 40 ein Signal eines Bremspedalsensors (Bremslichtschalter) 44, mit dem eine Betätigung des Hauptbremszylinders 12 feststellbar ist.

In Figur 2 ist schematisch ein Steuergerät 100 mit einer Steuereinheit 160, beispielsweise einem Mikroprozessor, dargestellt, welches in Abhängigkeit des Betriebs der Pumpe 110 Ansteuersignale an das Umschaltventil 130 liefert. Typischerweise ist das Steuergerät 100 identisch mit dem Steuergerät 40 aus Figur 1, jedoch kann auch vorgesehen sein, dass das Steuergerät 100 separat, beispielsweise dezentral ausgeführt sein kann. Alternativ bzw. zusätzlich kann das Steuergerät 100 auch Informationen über das Druckverhalten $p(t)$ bzw. den Volumenstrom $Q(t)$ im Bremskreis auswerten und bei der Ansteuerung des Umschaltventils 130 berücksichtigen. Zur Erfassung des Druckverhaltens bzw. des Volumenstroms kann ein Mittel 120 vorgesehen sein, dass die dafür notwendigen Parameter liefert. Für die Erfassung des Drucks kann dabei beispielsweise ein Drucksensor im Bremskreis vorgesehen sein, während für die Ermittlung des Volumenstroms eine Differenzbildung von verschiedenen Drücken in der Bremsanlage vorgesehen sein kann. Zu erwähnen sei weiterhin, dass aus den Betriebsparametern der Pumpe 110 bzw. 26 ebenfalls auf den Druck bzw. das Druckverhalten im Bremskreis geschlossen werden kann. Die für die Ansteuerung des Umschaltventils 130 notwendigen (pumpen- und ventilspezifischen) Parameter $t^*$ sowie $I_0$, $I_1$ und $I_2$ können in einem Speicher 140 abgelegt werden. Diese Parameter sind über eine externe Schnittstelle 150 modifizierbar.

Die Figuren 3a bis 3e zeigen den Zeitverlauf verschiedenen Ansteuerparameter bzw. Betriebsparameter der Bremsanlage bei einer typischen bekannten Ansteuerung eines Umschaltventils 130. Dabei wird in Figur 3a der Ansteuerstrom $I_P$ sowie die Drehzahl $n$ der Pumpe 110 dargestellt, wobei im Zeitpunkt $t_0$ die Pumpe eingeschaltet und zum Zeitpunkt $t_1$ wieder abgeschalten wird. Aufgrund einer Verzögerung durch das Beharrungsvermögens erhöht sich die Drehzahl $n$ der Pumpe nach dem Einschalten nicht sprunghaft, sondern parallelförmig erst mit einem gewissen zeitlichen Versatz bis zur maximalen Drehzahl. Entsprechend hält die in der Pumpe gespeicherte kinetische Energie diese nach Abschalten des Ansteuerstroms $I_P$ nach dem Zeitpunkt $t_1$ in Bewegung, bis die Dämpfung durch das Hydraulikmedium die Pumpe bis zum Stillstand dämpft. Bei diesem Nachlauf der Pumpe wird eine generatorische Spannung in der Pumpe erzeugt, die erfasst werden kann. Figur 3b zeigt den Druckverlauf $p(t)$ im Bremskreis, beginnend von einem Ausgangsdruck bzw. Startdruck $p_s$. Dabei steigt der Druck im Bremskreis nach Einschalten der Pumpe zum Zeitpunkt parabelförmig an, bis er zum Zeitpunkt $t_1$ den Maximaldruck erreicht hat. Die Ansteuerung $I_{USV}$ des Umschaltventils ist in Figur 3c dargestellt. Dabei wird davon ausgegangen, dass das Umschaltventil im stromlosen Zustand geöffnet ist. Um eine schnellere Schließung des Umschaltventils zu erreichen, wird das Umschaltventil in einem Ausführungsbeispiels mit einem geringen Strom $I_0$ vorbestromt, wobei in einem anderen Ausführungsbeispiel diese Vorbestromung auch entfallen kann. Zum Zeitpunkt $t_1$ wird der Regelbetrieb des Umschaltventil gestartet, in dem das Ventil mit einem Strom $I_1$ angesteuert wird. Durch diesen Strom $I_1$ ($>I_0$) wird das Ventil in einen teiloffenen Zustand versetzt, so dass die Öffnung bzw. der Hub des Ventils (siehe Figur 3e) vom Volumenfluss Qusv (siehe Figur 3d) durch das Ventil abhängt. Wie in der Zusammenschau der Figuren 3a bis 3e zu erkennen ist, steigt der Volumenstrom $Q_{USV}$ nach Einschalten der Pumpe parabelförmig an. Durch die Verwendung eines Umschaltventils, welches ein von der Druckdifferenz abhängiges Öffnungsverhalten aufweist, hält ein großer Volumenstrom $Q_{USV}$ das Umschaltventil offen. Somit erhöht sich der Hub des Umschaltventils ebenfalls parabelförmig bis zum Zeitpunkt $t_1$, an dem die Pumpe abgeschalten wird. Nachdem die Pumpe ausgeschalten ist, hängt der erreichbare Enddruck bzw. der Haltedruck $p_H$ u.a. vom Nachlauf der Pumpe und vom Öffnungsverhalten des Umschaltventils 18 ab. Da weder die Zeit $t_3$ bis zu der die Pumpe zum Stillstand kommt (Pumpennachlaufzeit), noch der Übergang des Ventils vom teiloffenen (Regelbetrieb) zum geschlossen Zustand aufgrund der vielen Randbedingungen (Last, Reibung, Drehzahl der Pumpe, Temperatur, Volumenstrom über das Umschaltventil) reproduzierbar ist, kann ein definierter Haltedruck $p_H$ im Bremskreis nicht eingestellt werden.

Entsprechend den Zeitverläufen in den Figuren 3a bis 3e sind in den Figuren 4a bis 4e die Verläufe bei Anwendung des erfindungsgemäßen Verfahrens dargestellt. Das Schaltverhalten der Pumpe in Figur 4a entspricht dabei dem Schaltverhalten, wie er in der Figur 3a dargestellt ist. Während jedoch der Haltedruck bei der bisherigen Ansteuerung des Umschaltventils nicht definierbar vorgebbar ist, zeigt Figur 4b, dass durch das erfindungsgemäße Verfahren ein reproduzierbarer Enddruck $p_H$ erreichbar ist. Dazu wird wie in Figur 4c beschrieben, das Umschaltventil beim Einschalten der Pumpe in to zunächst mit einem vorgebbaren Strom $I_2$ angesteuert, der größer als der Haltestrom $I_1$ ist. Nach Abschalten der Pumpe wird der Strom $I_2$ kontinuierlich auf den Haltestrom $I_1$, bei dem das Umschaltventil geschlossen bleibt, zurückgefahren. Dabei ist zu beachten, dass die Zeit $t^*$, in der der Strom zurückgefahren wird, größer als die Nachlaufzeit der Pumpe sein muss, d.h.

$$t^* = \Delta(t_3\text{-}t_1) > \Delta(t_2\text{-}t_1).$$

In Figur 4d ist dabei zu erkennen, dass das Nachlaufverhalten der Pumpe zunächst bis zum Zeitpunkt $t_2$ den Volumenfluss $Q_{USV}$ als auch den $Hub_{USV}$ des Umschaltventils bestimmt. Der Haltestrom $I_1$ ist dabei so gewählt, dass das Ventil bei einem vorgegebenen Volumenstrom $Q^*$ konstant wenigstens teilweise geöffnet bleibt. Erst nachdem ein Ausgleich der Druckdifferenz über dem Ventil zum Zeitpunkt $t_3$ erreicht wird und somit der Volumenstrom erliegt, schließt das Umschaltventil.

Durch Vorgabe der Zeit $t^*$, in der der Strom $I_2$ auf den Haltestrom $I_1$ zurück gefahren wird, kann somit ein definierter Haltedruck $p_H$ im Bremskreis erreicht werden oder umgekehrt. Die Pumpennachlaufzeit hat dagegen keinen Einfluss mehr auf die Einstellung des Haltedrucks.

Die Zeit $t^*$ kann pumpenspezifisch aufgrund von Erfahrungswerten für Nachlaufphase der eingesetzten Pumpe vorgegeben und in einem Speicher 140 abgelegt sein. Dabei ist es vorteilhaft, wenn dieser Wert beim Austausch der Pumpe 110 durch einen Servicetechniker 150 aktualisiert bzw. überschrieben werden kann. Eine weitere Möglichkeit in der Ermittlung und der Vorgabe der Zeit $t^*$ besteht darin, dass während des Betriebs der Bremsanlage kontinuierliche Daten über die Nachlaufphase der Pumpe gesammelt und im Speicher 140 abgelegt werden. Aus diesen Daten kann beispielsweise mittels gewichteter Mittelwertbildung auf die aktuelle benötigte Zeit $\Delta(t_2-t_1)$ für die Nachlaufphase der Pumpe geschlossen werden. Durch Addition einer Pufferzeit zu dieser benötigten Zeit kann so die Zeit $t^*$ bestimmt werden.

In einer weiteren Ausführungsform ist vorgesehen, dass das Umschaltventil nach dem Einschalten der Pumpe bei Erreichen eines bestimmten Solldrucks ($p_s$ + x) geöffnet und somit überströmt wird. Anschließend bleibt das Umschaltventil durch den zum Druckausgleich notwendigen Volumenstrom geöffnet, bis die Pumpe abgeschalten wird. Durch den Druckausgleich im Bremskreis und durch das defiriierte Absenken des Ansteuerstroms $I_{USV}$ am Umschaltventil von $I_2$ auf $I_1$ wird das Umschaltventil langsam geschlossen. Der Ansteuerstrom $I_1$ sichert den geschlossenen Zustand des Umschaltventils.

**Patentansprüche**

1. Verfahren zur Steuerung eines hydraulischen oder pneumatischen Bremssystems, wobei das Bremssystem wenigstens

    - einen elektrisch ansteuerbaren Pumpenmotor (38, 110) zum Druckaufbau in einem Bremskreis des Bremssystems (10) und
    - ein elektrisch ansteuerbares Ventil (18, 130) zur Druckregulierung in dem Bremskreis, wobei das Ventil (18, 130) bei Ansteuerung mit einem Haltstrom ($I_1$) bei einem vorgegebenen Volumenstrom ($Q^*$) konstant wenigstens teilweise geöffnet bleibt,

    aufweist, wobei
    - die Pumpe (26, 110) bei geschlossenem Ventil (18, 130) zum Druckaufbau in dem System angesteuert wird, und
    - das Ventil während des Pumpenbetriebs derart mit einer Ansteuerung ($I_2$) angesteuert wird, dass es bei Erreichen eines Druckschwellenwerts in eine Öffnungsposition gebracht wird, und
    - das Ventil (18, 130) nach Abschalten der Pumpe (18, 130) mittels einer zweiten Ansteuerung von der Ansteuerung ($I_2$) auf den Haltestrom ($I_1$) in einer vorgebbaren Zeit ($t^*$) kontinuierlich zurückgefahren wird,
    - der Nachlauf der Pumpe nach Abschalten der Pumpe erfasst wird, und
    - die vorgebbare Zeit in Abhängigkeit vom Nachlauf der Pumpe nach Abschalten der Pumpe derart vorgebbar ist, dass die Zeit ($t^*$) größer als die Nachlaufzeit der Pumpe ist.

2. Verfahren nach Anspruch 1, **dadurch gekennzeichnet, dass** die erste Ansteuerung mittels eines Startstroms und die zweite Ansteuerung mittels eines Haltestroms vorgesehen ist, wobei insbesondere vorgesehen ist, dass der Startstrom größer als der Haltestrom ist.

3. Verfahren nach Anspruch 1 oder 2, **dadurch gekennzeichnet, dass**

    - der Nachlauf der Pumpe nach Abschalten der Pumpe erfasst wird und
    - der Startstrom und/oder die vorgebbare Zeit in Abhängigkeit vom Nachlauf der Pumpe nach Abschalten der Pumpe vorgebbar ist,
    wobei insbesondere vorgesehen ist, dass
    - zur Erfassung des Nachlaufs der Pumpe die Drehzahl und/oder die generatorische Spannung erfasst werden, und/oder
    - der Nachlauf aus vorhergehenden Druckaufbau- bzw. -abbauzyklen abgeleitet wird.

4. Verfahren nach einem der vorherigen Ansprüche, **dadurch gekennzeichnet, dass** durch die kontinuierliche Veränderung der ersten Ansteuerung auf die zweite Ansteuerung ein zweiter Solldruck ($p_H$) im Bremskreis einstellbar ist, wobei insbesondere vorgesehen ist, dass die vorgebbare Zeit in Abhängigkeit von dem zweiten Solldruck vorgegeben ist.

5. Verfahren nach einem der vorherigen Ansprüche, **dadurch gekennzeichnet, dass** die Halteposition eine Schließposition des Ventils repräsentiert.

6. Verfahren nach einem der vorherigen Ansprüche, **dadurch gekennzeichnet, dass** der erste Solldruck im Bremskreis

- durch einen Drucksensor oder
- in Abhängigkeit des Volumenftusses ($Q_{USV}$) durch das Ventil und/oder der Ansteuerung der Pumpe

erfasst wird.

**7.** Vorrichtung zur Steuerung eines hydraulischen oder pneumatischen Bremssystems, insbesondere nach einem der Verfahren nach Anspruch 1 bis 6, wobei das Bremssystem wenigstens

- einen elektrisch ansteuerbaren Pumpenmotor (38, 110) in einem Bremskreis des Bremssystems (10) und
- ein elektrisch betätigbares Ventil (18, 130) zur Druckregulierung im Bremskreis, wobei das Ventil (18, 130) bei Ansteuerung mit einem Haltstrom ($I_1$) bei einem vorgegebenen Volumenstrom ($Q^*$) konstant wenigstens teilweise geöffnet bleibt, und
- ein Mittel (40, 100) zur Ansteuerung des Pumpenmotors und/oder des Ventils aufweist, wobei

- die Pumpe bei geschlossenem Ventil zum Druckaufbau in dem System mittels geeigneter Mittel (40) angesteuert wird, und
- die Mittel (100) derart ausgestaltet sind, dass

- das Ventil während des Pumpenbetriebs derart mit einer Ansteuerung ($I_2$) angesteuert wird, dass es bei Erreichen eines Druckschwellenwerts in eine Öffnungsposition gebracht wird, und
- das Ventil (18, 130) nach Abschalten der Pumpe (18, 130) mittels einer zweiten Ansteuerung von der Ansteuerung ($I_2$) auf den Haltestrom ($I_1$) in einer vorgebbaren Zeit ($t^*$) kontinuierlich zurückgefahren wird;
- der Nachlauf der Pumpe nach Abschalten der Pumpe erfasst wird und die vorgebbare Zeit ($t^*$) größer als die Nachlaufzeit der Pumpe ist.

**8.** Vorrichtung nach Anspruch 7, **dadurch gekennzeichnet, dass** das Mittel das Ventil bei der erste Ansteuerung mittels eines Startstroms und bei der zweiten Ansteuerung mittels eines Haltestroms ansteuert, wobei insbesondere vorgesehen ist, dass der Startstrom größer als der Haltestrom ist.

**9.** Vorrichtung nach Anspruch 7 oder 8, **dadurch gekennzeichnet, dass** Mittel (100) vorgesehen sind, die

- den Nachlauf der Pumpe nach Abschalten der Pumpe erfassen und
- den Startstrom und/oder die vorgebbare Zeit in Abhängigkeit des erfassten Nachlaufs aus wenigstens einem vorherigen Druckaufbau- bzw. -abbauzyklus ableiten,

wobei insbesondere vorgesehen ist, dass zur Erfassung des Nachlaufs der Pumpe die Drehzahl und/oder die generatorische Spannung erfasst werden.

**10.** Vorrichtung nach Anspruch 7, **dadurch gekennzeichnet, dass** durch die kontinuierliche Veränderung der ersten Ansteuerung auf die zweite Ansteuerung ein zweiter Solldruck im Bremskreis einstellbar ist, wobei insbesondere vorgesehen ist, dass die vorgebbare Zeit in Abhängigkeit von dem zweiten Solldruck vorgegeben ist.

**Claims**

**1.** Method for controlling a hydraulic or pneumatic brake system, the brake system having at least

- an electrically actuable pump motor (38, 110) for building up pressure in a brake circuit of the brake system (10), and
- an electrically actuable valve (18, 130) for pressure regulation in the brake circuit, wherein the valve (18, 130), upon actuation with a holding current ($I_1$), constantly remains at least partially open with a predefined volume flow ($Q^*$), wherein
- the pump (26, 110) is actuated with the valve (18, 130) closed in order to build up pressure in the system, and,
- during pump operation, the valve is actuated with an actuation ($I_2$) such that said valve is placed into an open position when a pressure threshold is reached, and,
- after the deactivation of the pump (26, 110), the valve (18, 130) is returned in a continuous manner in a predefinable time ($t^*$) by means of a second actuation from the actuation ($I_2$) to the holding current ($I_1$),
- the overrun of the pump after the deactivation of the pump is detected, and
- the predefinable time can be predefined as a function of the overrun of the pump after the deactivation of the pump such that the time ($t^*$) is greater than the overrun time of the pump.

**2.** Method according to Claim 1, **characterized in that** the first actuation is provided by means of a starting current and the second actuation is provided by means of a holding current, wherein it is provided in particular that the starting current is greater than the holding current.

3. Method according to Claim 1 or 2, **characterized in that**

- the overrun of the pump after the deactivation of the pump is detected and
- the starting current and/or the predefinable time can be predefined as a function of the overrun of the pump after the deactivation of the pump, wherein it is provided in particular that,
- for the detection of the overrun of the pump, the rotational speed and/or the generative voltage are detected, and/or
- the overrun is derived from preceding pressure build-up and dissipation cycles.

4. Method according to one of the preceding claims, **characterized in that**, by means of the continuous variation of the first actuation to the second actuation, a second setpoint pressure ($p_H$) can be set in the brake circuit, wherein it is provided in particular that the predefinable time is predefined as a function of the second setpoint pressure.

5. Method according to one of the preceding claims, **characterized in that** the holding position represents a closed position of the valve.

6. Method according to one of the preceding claims, **characterized in that** the first setpoint pressure in the brake circuit is detected

- by means of a pressure sensor or
- as a function of the volume flow ($Q_{USV}$) through the valve and/or the actuation of the pump.

7. Device for controlling a hydraulic or pneumatic brake system, in particular in accordance with one of the methods according to Claims 1 to 6, wherein the brake system has at least

- an electrically actuable pump motor (38, 110) in a brake circuit of the brake system (10), and
- an electrically actuable valve (18, 130) for pressure regulation in the brake circuit, wherein the valve (18, 130), upon actuation with a holding current ($I_1$), constantly remains at least partially open with a predefined volume flow ($Q^*$), and
- a means (40, 100) for actuating the pump motor and/or the valve,

wherein

- the pump is actuated by suitable means (40) with the valve closed in order to build up pressure in the system, and
- the means (100) are designed such that,

- during pump operation, the valve is actuated with an actuation ($I_2$) such that said valve is placed into an open position when a pressure threshold is reached, and,
- after the deactivation of the pump (26, 110), the valve (18, 130) is returned in a continuous manner in a predefinable time ($t^*$) by means of a second actuation from the actuation ($I_2$) to the holding current ($I_1$);
- the overrun of the pump after the deactivation of the pump is detected and the predefinable time ($t^*$) is greater than the overrun time of the pump.

8. Device according to Claim 7, **characterized in that** the means actuates the valve with a starting current during the first actuation and with a holding current during the second actuation, wherein it is provided in particular that the starting current is greater than the holding current.

9. Device according to Claim 7 or 8, **characterized in that** means (100) are provided which

- detect the overrun of the pump after the deactivation of the pump, and
- derive the starting current and/or the predefinable time from at least one preceding pressure build-up and dissipation cycle as a function of the detected overrun,

wherein it is provided in particular that, for the detection of the overrun of the pump, the rotational speed and/or the generative voltage are detected.

10. Device according to Claim 7, **characterized in that**, by means of the continuous variation of the first actuation to the second actuation, a second setpoint pressure can be set in the brake circuit, wherein it is provided in particular that the predefinable time is predefined as a function of the second setpoint pressure.

**Revendications**

1. Procédé de commande d'un système de freinage hydraulique ou pneumatique, dans lequel le système de freinage présente au moins

- un moteur de pompe (38, 110) pouvant être commandé électriquement pour augmenter la pression dans un circuit de freinage du système de freinage (10) et
- une soupape (18, 130) pouvant être commandée électriquement pour la régulation de la pression dans le circuit de freinage, la soupape (18, 130), dans le cas d'une commande avec un cou-

rant de maintien ($I_1$) pour un débit volumique prédéfini (Q*), restant constamment au moins en partie ouverte,
- la pompe (26, 110), lorsque la soupape (18, 130) est fermée, étant commandée en vue de l'augmentation de la pression dans le système, et
- la soupape, pendant le fonctionnement de la pompe, étant commandée avec une commande ($I_2$) de telle sorte qu'elle soit amenée dans une position ouverte une fois une valeur de seuil de pression atteinte, et
- la soupape (18, 130), après la coupure de la pompe (26, 110), étant ramenée en continu pendant un temps prédéfinissable (t*) au moyen d'une deuxième commande de la commande ($I_2$) au courant de maintien ($I_1$),
- le fonctionnement par inertie de la pompe étant détecté après la coupure de la pompe et
- le temps prédéfinissable pouvant être prédéfini en fonction du fonctionnement par inertie de la pompe après la coupure de la pompe de telle sorte que le temps (t*) soit supérieur au temps de fonctionnement par inertie de la pompe.

2. Procédé selon la revendication 1, **caractérisé en ce que** la première commande est prévue au moyen d'un courant de démarrage et la deuxième commande est prévue au moyen d'un courant de maintien, le courant de démarrage étant notamment prévu pour être supérieur au courant de maintien.

3. Procédé selon la revendication 1 ou 2, **caractérisé en ce que**

- le fonctionnement par inertie de la pompe est détecté après la coupure de la pompe et
- le courant de démarrage et/ou le temps prédéfinissable peuvent être prédéfinissables en fonction du fonctionnement par inertie de la pompe après la coupure de la pompe, et il est notamment prévu que
- pour la détection du fonctionnement par inertie de la pompe, la vitesse de rotation et/ou la tension du générateur soient détectées, et/ou
- le fonctionnement par inertie soit déduit des cycles d'augmentation et de diminution de la pression précédents.

4. Procédé selon l'une quelconque des revendications précédentes, **caractérisé en ce que** par la variation continue de la première commande à la deuxième commande, une deuxième pression de consigne ($p_H$) peut être ajustée dans le circuit de freinage, et il est notamment prévu que le temps prédéfinissable soit prédéfini en fonction de la deuxième pression de consigne.

5. Procédé selon l'une quelconque des revendications précédentes, **caractérisé en ce que** la position de maintien représente une position de fermeture de la soupape.

6. Procédé selon l'une quelconque des revendications précédentes, **caractérisé en ce que** la première pression de consigne dans le circuit de freinage est détectée

- par un capteur de pression ou
- en fonction du débit volumique ($Q_{USV}$) à travers la soupape et/ou en fonction de la commande de la pompe.

7. Dispositif de commande d'un système de freinage hydraulique ou pneumatique, en particulier selon un procédé selon l'une quelconque des revendications 1 à 6,
dans lequel le système de freinage présente au moins

- un moteur de pompe (38, 110) pouvant être commandé électriquement dans un circuit de freinage du système de freinage (10) et
- une soupape (18, 130) pouvant être commandée électriquement pour la régulation de la pression dans le circuit de freinage, la soupape (18, 130), dans le cas d'une commande avec un courant de maintien ($I_1$) pour un débit volumique prédéfini (Q*), restant constamment au moins en partie ouverte, et
- un moyen (40, 100) pour commander le moteur de pompe et/ou la soupape,
- la pompe, lorsque la soupape est fermée, étant commandée en vue de l'augmentation de la pression dans le système au moyen de moyens appropriés (40), et
- les moyens (100) étant configurés de telle sorte que
- la soupape, lors du fonctionnement de la pompe, soit commandée avec une commande ($I_2$) de telle sorte qu'elle soit amenée dans une position d'ouverture une fois une valeur de seuil de pression atteinte, et
- la soupape (18, 130), après la coupure de la pompe (26, 110), étant ramenée en continu pendant un temps prédéfinissable (t*) au moyen d'une deuxième commande de la commande ($I_2$) au courant de maintien ($I_1$) ;
- et le fonctionnement par inertie de la pompe après la coupure de la pompe étant détecté et le temps prédéfinissable (t*) étant supérieur au temps de fonctionnement par inertie de la pompe.

8. Dispositif selon la revendication 7, **caractérisé en ce que** le moyen commande la soupape lors de la première commande au moyen d'un courant de démarrage et lors de la deuxième commande au moyen d'un courant de maintien, le courant de démarrage étant notamment prévu pour être supérieur au courant de maintien.

9. Dispositif selon la revendication 7 ou 8, **caractérisé en ce que** des moyens (100) sont prévus, lesquels

    - détectent le fonctionnement par inertie de la pompe après la coupure de la pompe et
    - dérivent le courant de démarrage et/ou le temps prédéfinissable en fonction du fonctionnement par inertie détecté à partir d'au moins un cycle d'augmentation et de diminution de la pression précédent,
    et il est notamment prévu que pour détecter le fonctionnement par inertie de la pompe, la vitesse de rotation et/ou la tension du générateur soient détectés.

10. Dispositif selon la revendication 7, **caractérisé en ce que** grâce à la variation continue de la première commande à la deuxième commande, une deuxième pression de consigne peut être ajustée dans le circuit de freinage, et il est notamment prévu que le temps prédéfinissable soit prédéfini en fonction de la deuxième pression de consigne.

**Fig. 1**

**Fig. 2**

**Fig. 3a**

$I_P$
$n$

$t_0$  $t_1$  $t_2$  $t$

**Fig. 3b**

$p$

$p_H$

$p_S$

$t_0$  $t_1$  $t$

**Fig. 3c**

$I_{USV}$

$I_1$

$I_0$

$t_0$  $t_1$  $t$

**Fig. 3d**

$Q_{USV}$

$t_0$  $t_1$  $t$

**Fig. 3e**

$Hub_{USV}$

$t_0$  $t_1$  $t$

Fig. 4a

Fig. 4b

Fig. 4c

Fig. 4d

Fig. 4e

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19546682 A1
- DE 19548248 A1

- DE 19820884 A1